# EUROPEAN PATENT APPLICATION

(11) **EP 1 179 965 A2**
(43) Date of publication of application: **13.02.2002**
(21) Application number: 01118521.2
(22) Date of filing: 01.08.2001
(51) Int. Cl.: H04Q 11/04, H04Q 11/00

(54) **Atm-pon dual system, line terminal, network unit and method therefor**

(30) Priority: 10.08.2000 JP 2000243029
(71) Applicant: NEC CORPORATION, Tokyo (JP)
(72) Inventor: Nakaishi, Hiroshi, Minato-ku, Tokyo (JP)
(74) Representative: Baronetzky, Klaus, Dipl.-Ing.

(57) **Abstract**

An ATM dual system wherein the intervals between couplers and ONUs are dualized comprises a dualized line termination device loading a PLOAM cell transmitter/receiver within an OLT, the PLOAM cells being used for monitoring and being transmitted and received between the OLT and the ONU, and a PST message transmitter/receiver which loads and allocates switch controlling information to K1/K2 byte areas of the aforementioned PLOAM cells, and a VP/VC switch which switches each of the relevant VP or VC on the basis of the aforementioned K1/K2 byte information.

## Description

### BACKGROUND OF THE INVENTION

The present invention relates to a reliable dual configuration of an ATM-PON (Asynchronous Transfer Mode Passive Optical Network) in a fiber optical subscriber network system.

### Description of the Related Art

In order to accommodate subscribers with multimedia services including a video service and internet access, there has been introduced a high-speed and large capacity optical subscriber access system, the ATM-PON, which is a passive double star using an Asynchronous Transfer Mode (ATM) providing offices and homes with an optical fiber instead of a conventional metallic cable.

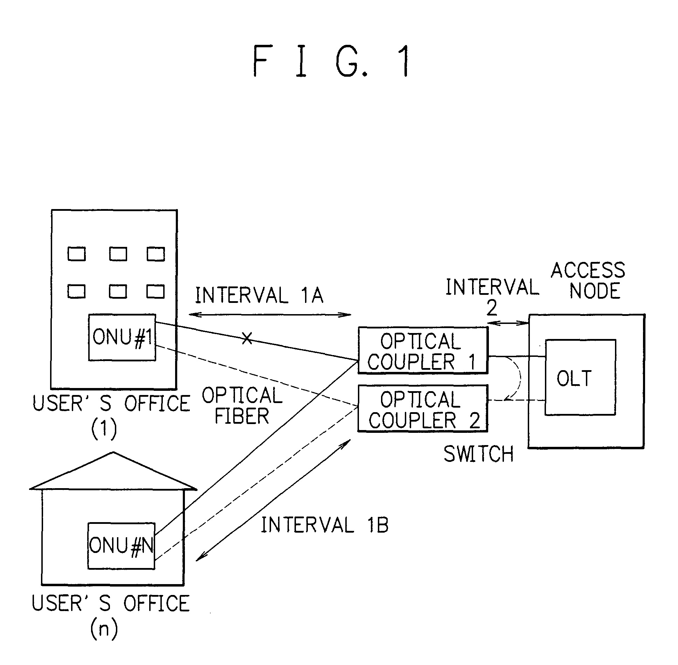

Fig. 1 is a configuration example of the ATM-PON and shows an optical subscriber system such as FTTB (Fiber to the Building) and FTTH (Fiber to the Home).

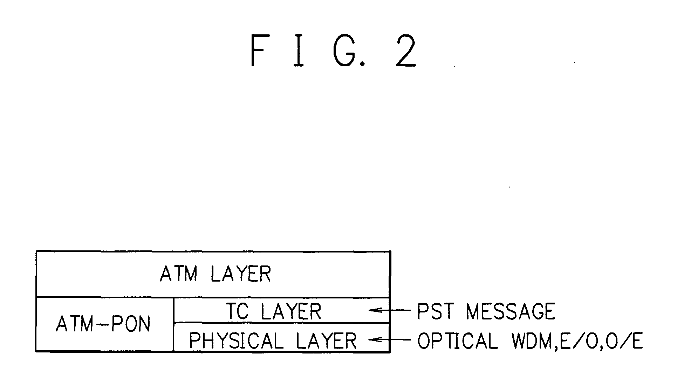

Thereby, in an optical subscriber access system, the ATM-PON is configured so as to passively branch and couple optical signals from a station-side OLT (Optical Line Terminal) by an optical star coupler, that is, an optical turnout/coupler, having a multipt connection, and then connect, by using optical fibers, to a plurality of subscriber-side ONUs (Optical Network Units) installed at such as offices. Here, 155Mbit/s bothway communications using optical fibers are realized by a wavelength division multiplexing method with a 1.5µm wavelength band for a downstream band and a 1.3µm wavelength band for an upstream band. The ONU comprises a terminal interface corresponding to a variety of communication services provided to users and an optical transmission interface. Fig. 2 is an explanation drawing showing a protocol stack of the ATM-PON. As shown in Fig. 2, the ATM-PON has a structure wherein the optical WDM, E/O and O/E are included in the physical layer, a protocol is installed in the TC layer for transmitting PST messages, and the ATM protocol is loaded at the upper side of the ATM-PON. Meanwhile, demands for the ATM-PON leased line services have been increased at enterprises. In this case, with the FTTB configuration, communications are established by connecting to offices of an enterprise with the VP (Virtual Path) of the ATM and using a precedently contracted bandwidth. In the sight of operating an access network, the ATM-PON protection architecture is significant for increasing reliability of the access network itself.

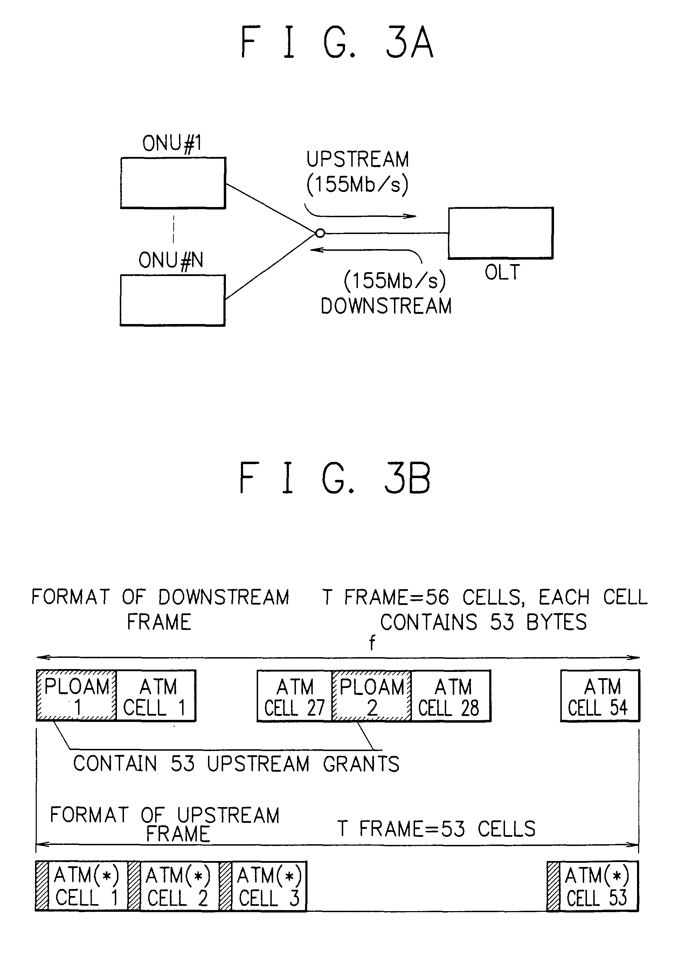

Fig. 3 is an explanation drawing showing a frame structure of an upstream interval and a downstream interval of the ATM-PON. In the ATM-PON leased line services, communications are established in the way that, on the basis of contract of subscription, a bandwidth per user is determined by inserting cells for an OAM (PLOAM cells) at a fixed ratio into a frame with a fixed length. This description is defined in ITU-T Recommendation G.983.1. More specifically, in the downstream direction, one frame includes 56 cells; each cell contains 53 bytes, whereof first and twenty-ninth cells are used as the PLOAM (Physical Layer OAM) cells wherein supervisory control information is installed. In addition, in the upstream direction, one frame contains 53 cells including overhead areas.

The invention disclosed in the Japanese Patent Application Laid-Open No. 2000-4461 refers to an art which changes line setting in an optical access network. According to this conventional art, in an optical subscriber system controlling TDMA (Time Division Multiple Access), by matching a TDMA time slot of before switching and that of after switching, lines are changed by non break change over in operation.

Further, the invention disclosed in the Japanese Patent Application Laid-Open No. HEI 9-107358 provides, as a subscriber line storing method in an optical subscriber transmission system, a passive double star of the ATM, which can heighten a statistical multiplexing effect even when service demands of users are varied. The invention comprises a connecting style capable of storing different subscribers in each of a primary system and a backup system of the ONU, thereby a primary system and a backup system are switched according to each subscriber's communication status such as a connecting situation and information capacity.

However, as shown in Fig. 1, in the configuration of the ATM-PON which switches the PON LT, connecting optical couplers and the OLT, to 0-system and 1-system, switch between 0-system and 1-system was executed when the signal cut-off of the upstream direction is detected in each of the lines between the ONUs and optical couplers (interval 1A and 1B), any line intervals (interval 2) between optical couplers and the OLT, or the PON LT within the OLT. In this way, all of the lines stored in the optical coupler were switched despite of , for example, normal operation of the interval 1B in Fig. 1. Thus, a subscriber enjoying communication services suffers from troubles such as data shutoff even though nothing is wrong with communication lines of his or her own. Additionally, more branches in the optical coupler invite the aforementioned troubles more frequently. In other words, the trouble becomes more outstanding when more subscriber lines exist.

Incidentally, in case that switching a VP (Virtual Path) or a VC (Virtual Channel) is executed through a software process, since the procedure for opening and setting up the VP and the VC becomes complicated, high-speed process cannot be executed and the problems such as data loss and data delay are to be generated. In this way, the interval between the OLT and couplers is used to be dualized, however it has also become necessary to dualize the interval between couplers and the ONUs in order to improve system reliability. The invention disclosed in the Japanese Patent Application Laid-Open No. 2000-4461 introduces the art employing the TDMA time slot, but which cannot be directly applied to the ATM-PON.

The invention disclosed in the Japanese Patent Application Laid-Open HEI No. 9-107358 is based on the assumption that user's service demands are to be varied, and whose functional configuration is redundant for the ATM-PON leased line services.

The present invention has been made in view of the aforementioned problems and shortcomings, and to provide the ATM-PON protection method which, without giving any effects on lines which generate no failures, switches to high-speed backup system per VP or VC of the ATM-PON leased line services.

### SUMMARY OF THE INVENTION

Accordingly, the present invention relates to an ATM-PON dual system dualizing the interval between the optical couplers and the ONUs and providing the leased line services, an OLT, an ONU and an ATM-PON dual method, and it is an object of the present invention to provide an ATM-PON protection method for switching to a high-speed backup system.

The ATM-PON dual system of the present invention comprises a control information loading means which loads switch controlling information into the given area of a format transmitted and received between the OLT and the ONU, and a switch controlling means which switches to the VP or the VC on the basis of the aforementioned switch controlling information.

Further, the aforementioned switch controlling information is characterized in switching by using K1/K2 byte areas of a PLOAM cell for a monitor, transmitted and received between the OLT and the ONU.

The aforementioned OLT comprises a frame structuring means which loads SC (Switch Confirmation requirement) signals and SR (Switch Requirement) signals into unused K1 or K2 bytes of the message area within the PLOAM cell, and a switch requirement transmitting means which requires switching lines of the ONU by using the K1/K2 bytes.

Further, the aforementioned OLT is provided with a dualized line termination device loading a transmitter/receiver of PLOAM cells for a monitor transmitted and received between the OLT and the ONU, and a transmitter/receiver of PST messages loading and dividing switch controlling information in the K1/K2 byte areas of the aforementioned PLOAM cells, and a VP/VC switch which switches for each of the VP or VC on the basis of the aforementioned K1/K2 byte information.

Still further, the aforementioned ONU, while it is configured by dualizing the interval between the ONU and the PLT and provided with two line termination units terminating each line, is provided with a transmitting means which allocates signals from subscribers into the aforementioned two line termination devices and transmits the signals to the aforementioned OLT, a receiving means which receives the signals, broadcasted from the OLT, at each of the line termination devices, and a selector which selects one or the other of the aforementioned line termination devices by receiving the signals thereof.

Additionally, the ONU comprises a switch deciding means which decides possibility of switching the ONU on the basis of existence of switch controlling information received at each line termination unit from the OLT.

Also, the aforementioned switch deciding means of the ONU is featured in making a decision on the basis of the precedently defined state transition table.

With the above-mentioned configuration, the present invention is able to provide the ATM dual system capable of switching in high-speed.

### BRIEF DESCRIPTION OF THE DRAWINGS

The objects and features of the present invention will become more apparent from the consideration of the following detailed description taken in conjunction with the accompanying drawings in which:
Fig. 1 is a configuration drawing of a conventional ATM-PON network;
Fig. 2 is an explanation drawing showing a protocol stock of the ATM-PON;
Fig. 3A is an explanation drawing showing a frame structure at the upstream interval and the downstream interval;
Fig. 3B is an explanation drawing showing a frame structure at the upstream interval and the downstream interval;
Fig. 4 is a configuration diagram of an ATM-PON dual system of the embodiment of the present invention;
Fig. 5A is a format example of a PLOAM cell of the embodiment of the present invention;
Fig. 5B is a format example of a PLOAM cell of the embodiment of the present invention;
Fig. 5C is a format example of a PLOAM cell of the embodiment of the present invention;
Fig. 6A is an explanation drawing showing a transmission status of a frame of the downstream direction;
Fig. 6B is an explanation drawing showing a transmission status of a frame of the downstream direction;
Fig. 7 is a block diagram showing a configuration of the OLT of the present invention;
Fig. 8 is a sequence drawing showing a switching operation of the embodiment of the present invention;
Fig. 9A is a chart showing the status of receiving SC signals;
Fig. 9B is a status transition chart of the ONU;
Fig. 10 is a sequence drawing showing an individual switching operation of the embodiment of the present invention;
Fig. 11 is a configuration drawing of an ATM-PON dual system of another embodiment of the present invention;
Fig. 12 is a sequence drawing showing a simultaneous switching operation of the embodiment of the present invention; and
Fig. 13 is a configuration drawing of an ATM-PON dual system of another embodiment of the present invention.

### DESCRIPTION OF THE PREFERRED EMBODIMENTS

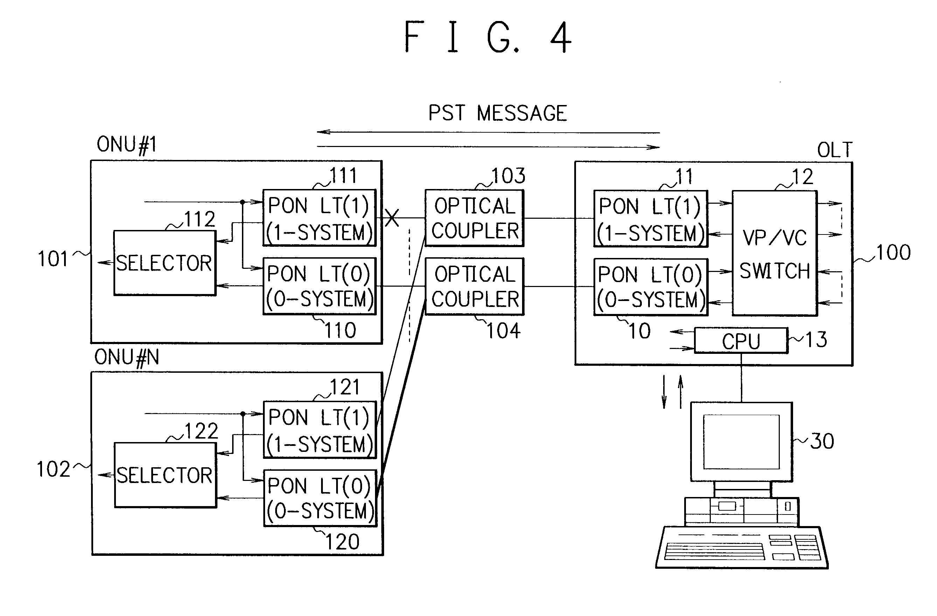

A description will be given of embodiments of the present invention with reference to the accompanying drawings. Fig. 4 is a configuration diagram of an ATM-PON dual system of the embodiment of the present invention. An OLT, couplers and ONUs are respectively connected by optical fibers. By using a theoretical path of a VP or a VC of the ATM, the ATM cell data are transmitted and received between ONUs of each subscriber's home and an OLT.

The present invention provides the ATM-PON dual system dualizing all of the OLTs, the optical couplers and the ONUs. For example, as shown in Fig. 4, when failures are generated in the line interval between the optical couplers and the ONU, only the failed VP is to be switched in high-speed with a simple structure without switching all of the lines stored in the corresponding optical coupler. In this embodiment, switch of the VP service will be mainly focused, and it goes without saying that the embodiment of the present invention also can be applied to switch of the VC service.

In the following, a detailed explanation will be given on a configuration of the present invention referring to drawings. The internal configuration of an OLT 100 includes a VP/VC switch 12 which sets up a path for each VP/VC, a primary PON LT (0) 10, a backup PON LT (1) 11, and a computer CPU 13 which sends a line switching order to the VP/VC switch 12 while collecting line supervisory information and alarm information from the PON LT (1) 11 and PON LT (0) 10.

In this way, the OLT 100 is provided with the 0-sytem PON LT (0) and 1-system PON LT (1), and operates switching of the VP or the VC at the VP/VC switch 12 placed at the subsequent stage. Incidentally, a parameter necessitated for controlling and operating the VP/VC switching operation, such as VP/VC setting table information, is set up and controlled via the CPU 13 by an AN (access node) management system 30.

Further, on the communication lines connected by optical fibers, there are equipped an optical coupler 103 branching optical signals of the primary line from the OLT 100, and an optical coupler 104 branching optical signals of the backup line from the OLT 100.

The ONU i (i = 1 ...N) stored at subscribers' homes or offices comprises the primary PON LT (0) i (i = 1 ...N), the backup PON LT (1) i (i = 1 ...N) and a selector i (i = 1 ...N) selecting either PON LT (0) i or PON LT (1) i wherefrom the data signals of the downstream lines are obtained.

The ONU i (i = 1 ...N), in the upstream direction, broadcasts identical data signals from subscribers to two PON LTs of 0-system and 1-system, and in the downstream direction, selects the identical signals, by using a selector, received at each of PON LT (0) and PON LT (1) and transmits them to subscribers.

The downstream signals from the OLT to the ONU i (i = 1, 2, 3 ...N) are divided from the coupler 1 to each ONU i in the primary line, and terminated at the primary PON LT (0) i of the ONU i. On the other hand, the downstream signals from the OLT to the ONU i (i = 1, 2, 3 ...N) are divided from the coupler 0 to each ONU i in the backup line, and terminated at the backup PON LT (1) i of the ONU i. The signals terminated at the PON LT (0) i and the PON LT (1) i are obtained from either the PON LT(0) i or the PON LT (1) i by a selector i, and generally setting is made so as to obtain from the primary one. Here, for the sake of the ATM-PON protection in the present invention, information for switching lines is loaded by using the message area of the PLOAM cells, and switch to 0-system and 1-system is executed by referring to the information at the reception side.

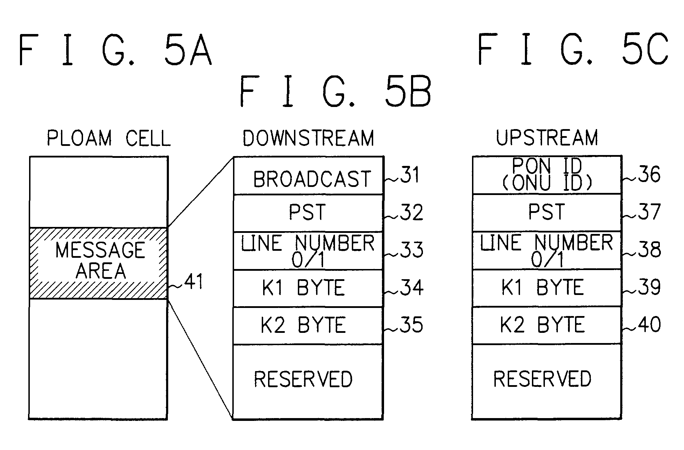

Fig. 5 is a format example of a PLOAM cell according to the embodiment of the present invention. Fig. 5A is a configuration of the entire format of the PLOAM cell, Fig. 5B is a configuration example of a message area used in the downstream direction of the present invention, and Fig. 5C is a configuration example of a message area used in the upstream direction of the present invention. In the present invention, a message area of the PLOAM cell is used for controlling purpose in order to execute switching. For the sake of the ATM-PON protection, information of K1/K2 bytes of the message area in the PLOAM cell is used, and thus information for switching lines is loaded. And, switch to 0-system and 1-system is executed by referring to the information at the reception side.

With the aforementioned configuration, only by referring to K1/K2 bytes of the specified PLOAM cell area of a frame transmitted between the ONU and the OLT, the interval where failures are generated is switched to the backup system in high-speed by hardware-like process as switch of K1/K2 bytes of a SDH frame. In other words, since the PLOAM cell is placed at the precedently fixed special position of the frame transmitted on the transmission path, and switch information is stored in the specified K1/K2 byte storage area within the PLOAM cell, switching can be operated in each ONU referring to the precedently determined area, and thus a configuration can be made so that switch information can be detected by hardware, or software whereby detection can be realized by a simple sequence.

According to the embodiment of the present invention, as shown in Fig. 5, a message area 41 of the PLOAM cell comprises an identifier 31 indicating a broadcast, an identifier 32 identifying a PST message, an identifier 33 showing line numbers of 0-system and 1-system, a K1-byte storage area 34 and a K2-byte storage area 35. The upstream direction comprises a PON ID 36 for identifying the ONU, an identifier 37 identifying a PST message, an identifier 38 showing line numbers of 0-system and 1-system, a K1-byte storage area 39 and a K2-byte storage area 40.

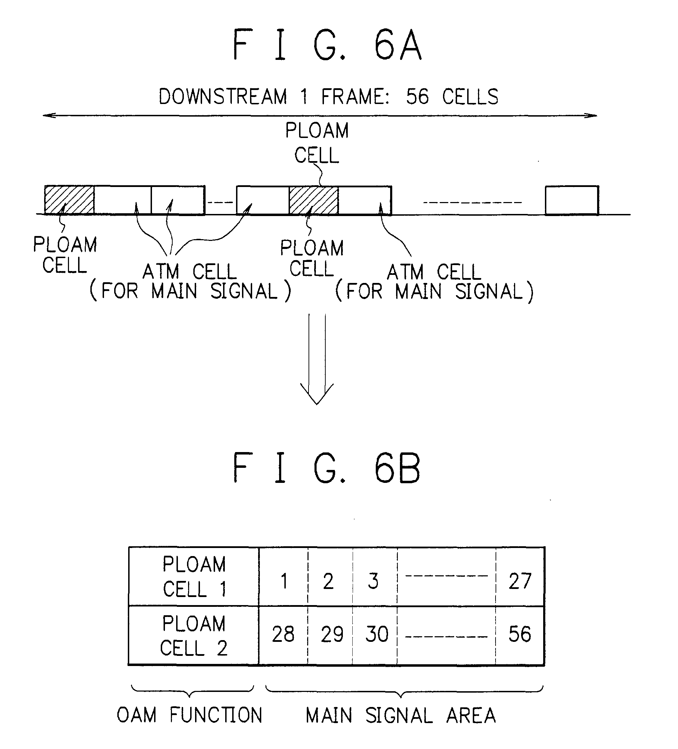

Fig. 6 is an explanation drawing showing a transmission status of PLOAM cells inserted into a frame of the downstream direction. As shown in Fig. 6A, one frame containing 56 cells is consecutively transmitted in time-series order. In this case, since the PLOAM cells are precedently and fixedly allocated, the ONU, which receives the data from the OLT, monitors the specified K1/K2 byte areas of the PLOAM cell within a frame.

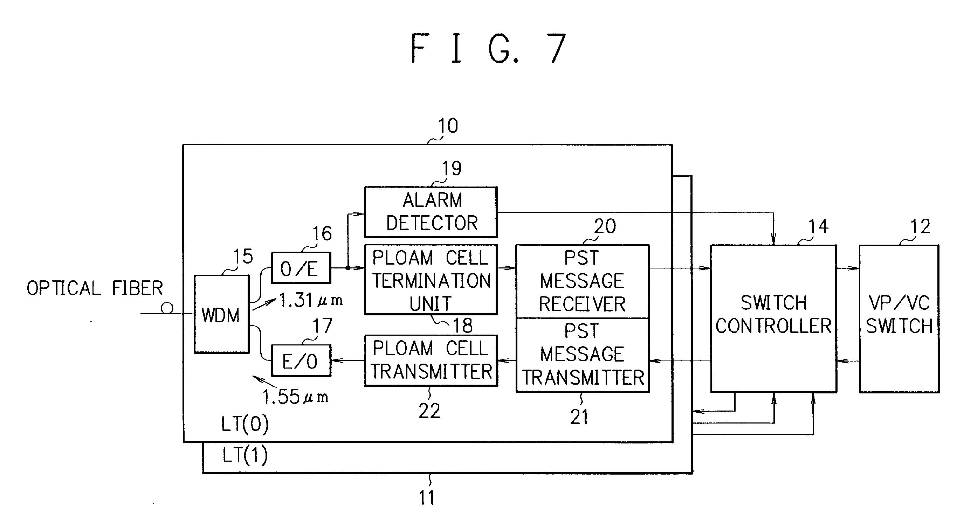

Fig. 7 is a block diagram showing a detailed configuration of the OLT of the present invention. As is apparent from Fig. 7, a configuration is provided with a 0-system line termination unit 10, a 1-system line termination unit 11, a VP/VC switch 12, a wavelength division multiplexer (WDM) 15, an O/E converter 16, an E/O converter 17, a PLOAM cell termination unit 18, an alarm detector 19, a PST message receiver 20 and a PST message transmitter 21.

In the aforementioned configuration, the PST message assembled at the PST message transmitter 21, which is a function of a TC layer of the ATM-PON, is inserted with the PLOAM cells for each time slot 28 at the PLOAM cell transmitter 22 and electrically-optically converted at the E/O converter 17 and transmitted to subscribers via the WDM 15.

Next, an explanation will be given on processing sequence of the present invention. In Fig. 4, the downstream signals from the OLT to the ONU i (i = 1, 2, 3 ...N) are divided from the optical coupler 103 to each ONU i, in case that the current primary line is 1-system, and then terminated at the primary PON LT (0) i of the ONU i. On the other hand, the downstream signals from the OLT to the ONU i (i = 1, 2, 3 ...N) are divided from the optical coupler 104 of the backup line to each ONU i, and then terminated at the backup PON LT (1) i of the ONU i.

The signals terminated at the PON LT (0) i and the PON LT (1) i are obtained from either the PON LT (0) i or the PON LT (1) i by a selector i, and generally initial setting is made to obtain from the primary PON LT (0) i.

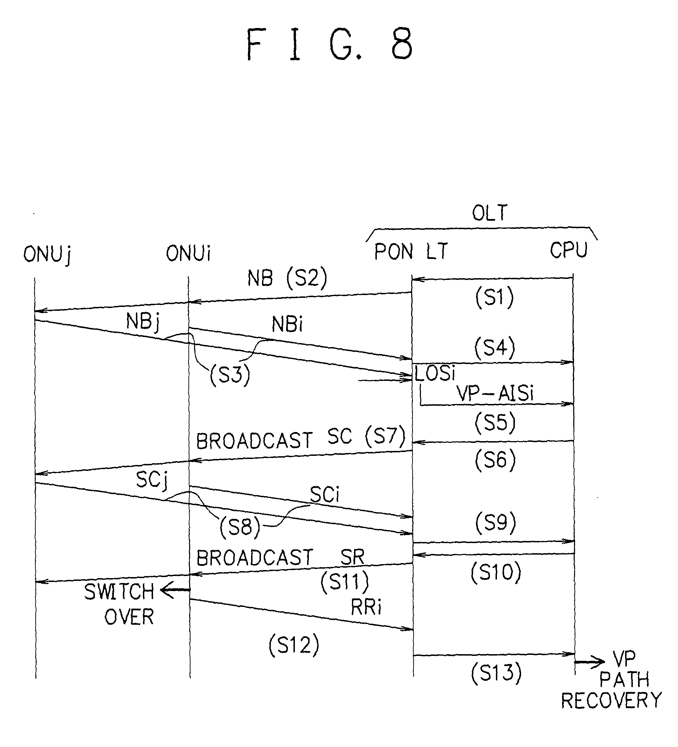

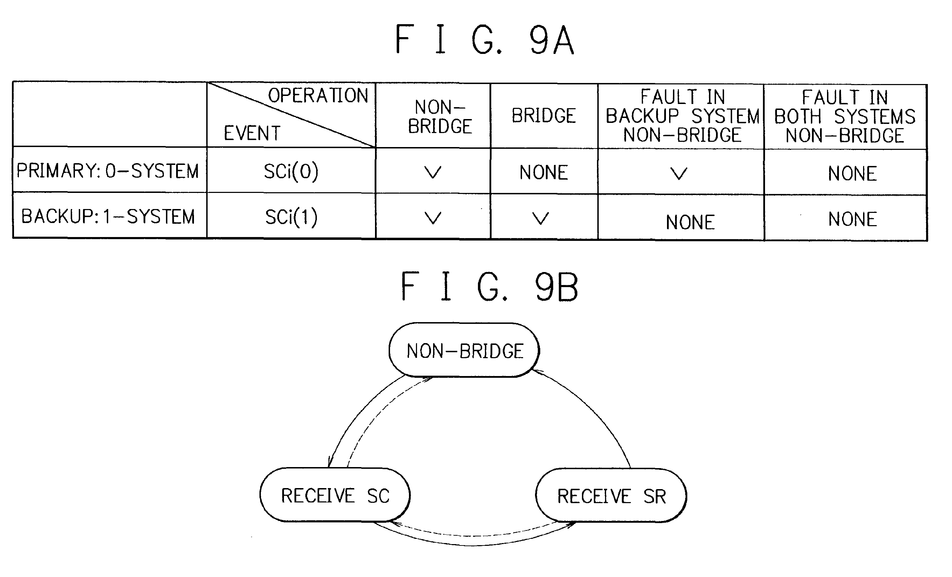

Next, an explanation will be given on a switching sequence according to the embodiment of the present invention. In the first embodiment, switching is operated by broadcasting a switch message to all of the ONUs connected to the downstream when switch of each VP is executed for example, owing to failures generated in each line between the ONU and the optical coupler. Here, only the ONUs required for switching autonomously carry out switching. Fig. 8 is a sequence drawing showing switching operation of the first embodiment of the present invention. Referring to Figs.8 and 9, the process will be explained.

At the interval between the OLT and each of the ONUs, condition of equipments and lines is monitored on a regular basis by use of a PST message. When a system is normal, NB (Non-Bridge) signals are transmitted from the OLT to each of the ONUs (Step S2) as shown in Fig. 7, and when a system is not switched from each of the ONUs to the OLT, NBi and NBj signals are returned (Step S3). In the CPU the NBi and NBj signals are monitored (Step S4).

In the aforementioned process, when a transmission path is cut off, the LOS (Loss of Signal) is detected as a signal cutoff at the PON LT, and the PON LT transmits the VP-AIS signals or the equivalent switching trigger to the CPU and the subsequent stage (Step S5). For instance, supposing that a failure is generated on the line between the coupler 1 and the ONU 1, NB1 signals from the ONU1 are not received at the OLT. Further, the OLT is able to identify that a failure is generated in the primary line by detecting the LOS, and automatically or on the basis of the order made by a worker, transmits SC (Switch Confirmation requirement) signals to each of the ONUs (Step S7), and then each of the ONUs returns the SCi and SCj (Switch Confirmation reply) signals to the OLT (Step S8). Thereby, since the ONU side confirms that a line switch is ready, SR (Switch Requirement) is transmitted to each of the ONUs (Step S11). The ONU received the SR operates a selector and switches data retrieval from the primary PON LT (1) to the backup PON LT (0) (Step S12).

Here, the first embodiment describes a transmission pattern of the SC and the SR such as transmitting the SC and the SR from the OLT to each of the ONUs all together, and deciding the necessity for switching at the ONU side. The ONU side judges the necessity for switching on the basis of whether the data is transmitted at both of the primary PON LT (0) and the backup PON LT (1), either one of them or none of them.

Fig. 9A is a chart showing the receiving status of the SC signals and Fig. 9B is a status transition chart of the ONU. Here, it is supposed that 0-system is a primary system and 1-system is a backup system. When the SC signals are broadcasted at the OLT, the PON LT (0) i and the PON LT (1) i of the ONU i, under the normal condition, respectively receive the SCi (0) signals and the SCi (1) signals. As is shown in Fig. 9A, on the basis of existence of event reception of the SCi (0) signals and the SCi (1) signals, a decision is made on whether switch is operated in the ONU. Here, in case that the SC signals are normally received at both of the primary and the backup systems, switch is not operated.

Next, in case that only the SCi (0) signals are not received at a primary 0-system, it becomes subject to switching, and then switch to a backup 1-system is executed. On the contrary, in case that only the SCi (0) signals are received and the SCi (1) signals are not received, switch is not executed since it is considered as epidemic of a backup system device. In case that the SCi signals are received at neither a primary system nor a backup system, switch is not executed.

Fig. 9B is a status transition chart of the ONU showing transition patterns of a NB (Non-Bridge) status, a status of receiving the SC and a status of receiving the SR signals.

As shown in Fig. 9, a configuration wherein the necessity of switching is decided only at the ONU has a favorable effect of simplifying the function at the OLT side and preventing the ONU without failures from being switched to the backup line.

Next, an explanation will be given on a second embodiment of the present invention referring to drawings. In the second embodiment, the ONU whereto the NB signals are not returned is identified at the OLT side, and order for switching is given only to the relevant ONU. In the same manner as the first embodiment, the second embodiment describes a transmission pattern of the SC and the SR such as transmitting the SC and the SR from the OLT to the specified ONU and the necessity of switching is decided at the ONU side.

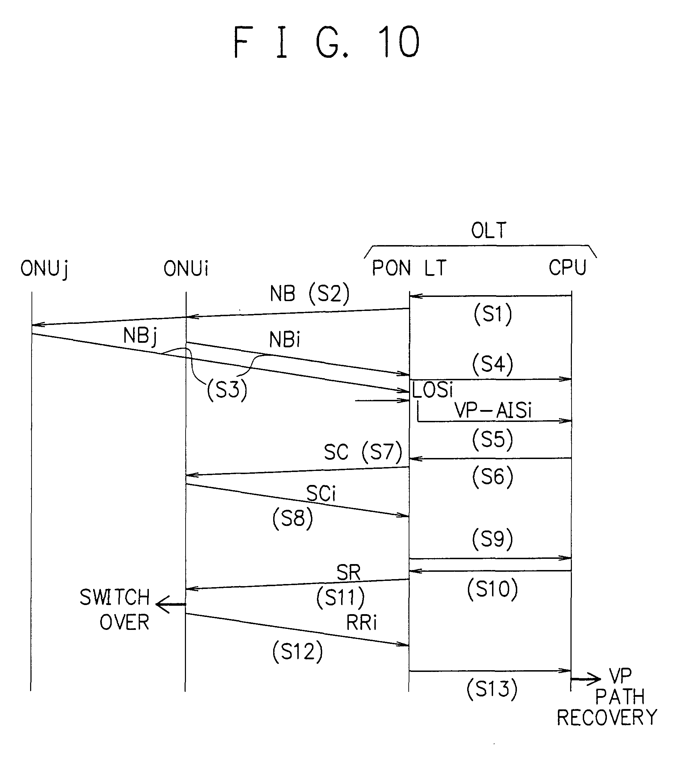

Fig. 10 is a sequence diagram. As shown in Fig. 10, the interval with a failure is specified to some extent at the OLT side by an alarm of the PON interval (Step S5). Thereafter, the SC is transmitted, and it is defined that failures are generated on the lines which are not able to receive the SCi (0) signals and SCi (1) signals transmitted from the ONU (Step S8). Then, by searching the VP or VC of the ONU connected to the lines with failures, preparation for switching is made. Then, the OLT receives the SR. After receiving the RRi transmitted from the ONUi subject to switching via the backup transmission path, the path of the aforementioned VP or the VC which are ready for switching is set up. In other words, the upstream path is set up for the backup LT. As shown in Fig. 5, since the ONU ID is loaded on the PST message of the upstream PLOAM cells, the ONU of the interval with troubles can be detected by monitoring at the OLT side.

In the second embodiment, in order for switch of the VP/VC to be executed, setting for switching the corresponding VP is made at the VP/VC switch 12. And then, switch controlling information concerning the relevant ONU is generated at the PST message transmitter, and the information is loaded on the PLOAM for the frame transmitted to the relevant downstream lines concerning the specified ONU, and the PLOAM cells are inserted into the fixed area of the frame. In the concerned ONU, while the specified area of the transmitted frame format, that is, the K1/K2 byte areas of the PLOAM cells stored in the first and the twenty-eighth of the frame, is periodically monitored, in case that the PLOAM cells including switch information are received, the necessity for switching is judged on the basis of the status chart shown in Fig. 9 regarding the SC signals received at the 0-system and 1-system respectively by the hardware or the simple software process, and then switch controlling is executed.

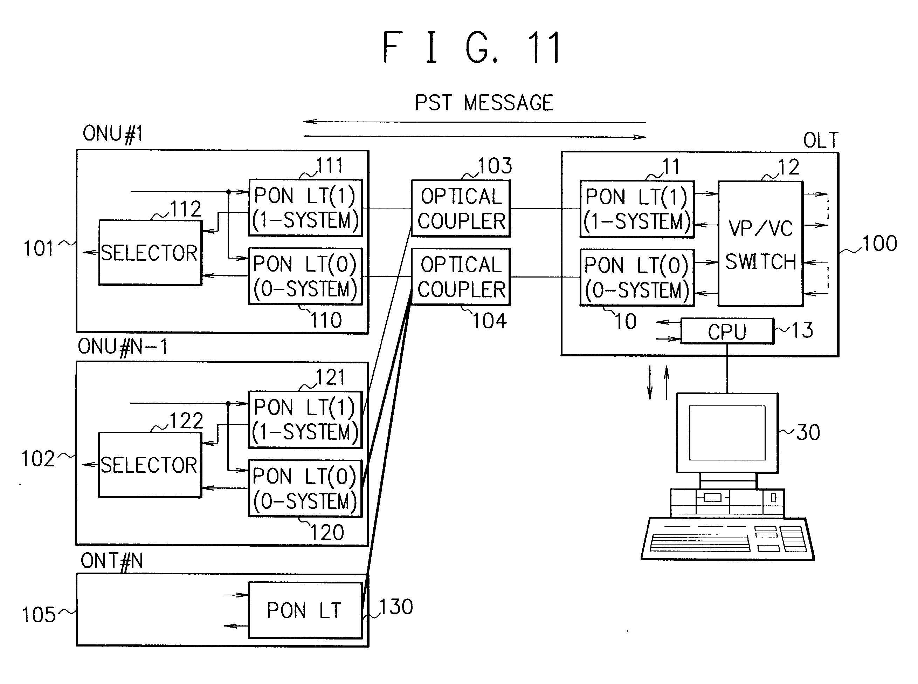

Next, explanation will be given on a third embodiment of the present invention referring to drawings. As shown in Fig. 11, in the third embodiment, a configuration includes the ONU k (k = 1 ... M) connected to either the optical coupler 103 branching the optical signals of the primary lines, or the optical coupler 104 branching the optical signals of the backup lines.

In this way, in case of mixing a single system partially, the present invention can switch it to the dual system. In other words, although the interval between the ONU k (k = 1 ... M) and the optical coupler is one fold, when any one of the lines of the interval with ONUs and optical couplers in Fig. 4 generates a failure, switch is executed for each VP with a failure, and thus there will be no operational impediment.

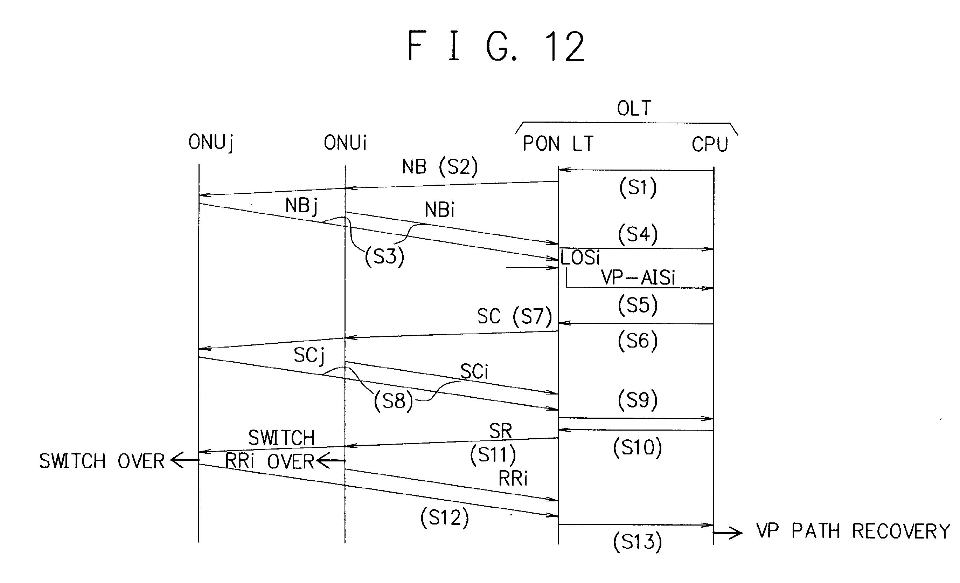

Next, an explanation will be given on a fourth embodiment. According to the fourth embodiment, as the case of operational maintenance, when the optical coupler itself is removed and replaced, the entire lines are switched from the primary systems to the backup systems all together. In the fourth embodiment, switch will not be executed on the basis of the status transition chart as shown in Fig. 9. In other words, in case of switching the optical couplers 103 and 104, when each of the ONUi (i = 1, 2, 3 ... N) receives the SC signals, each ONU switches the lines all together. Fig. 12 is a sequence drawing of the aforementioned case.

The switching styles are classified by changing the switching styles on the basis of the information transmitted from the AN management system separately.

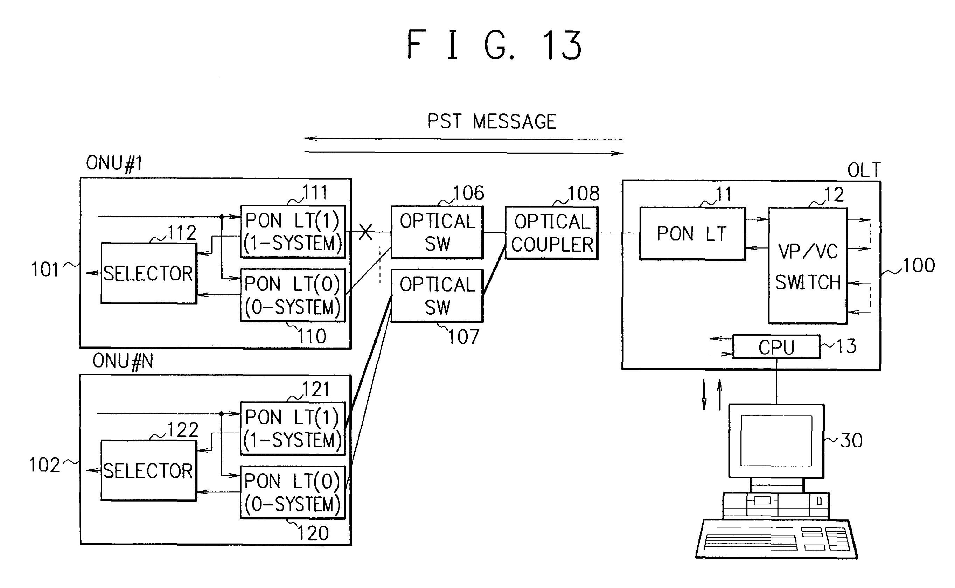

Next, an explanation will be given on a fifth embodiment. According to the fifth embodiment, as shown in Fig. 13, there are provided one coupler connecting between a plurality of ONUs and the OLT, and a plurality of optical switches 106 and 107 at the front stage of the subscribers' side of the aforementioned coupler. By using the optical switches, switching between the primary system and the backup system is executed, and thus switching can be executed for every line (for every ONU). Here, although not explicitly shown in Fig. 13, switching the optical switches 106 and 107 can be controlled by using the signal lines used for data transfer while being controlled by an access network management system 30, or by providing control lines using additional lines from the optical switches 106 and 107 and the access network management system 30. Or, in case that a failure of the precedently determined line is detected by the optical switch or the OLT, a configuration can be made so that switch is executed by these devices.

Consequently, the present invention is able to improve reliability of the system by providing an ATM-PON protection method which switches to the high-speed backup system, without giving any effects on the lines without failures, for the VP or the VC while the interval between the coupler and the ONU is dualized for the ATM-PON leased line services.

While the present invention has been described with reference to the particular illustrative embodiments, it is not to be restricted by these embodiments but only by the appended claims. It is to be appreciated that those skilled in the art can change or modify the embodiments without departing from the spirit and scope of the present invention.

## Claims

1. An ATM-PON (Asynchronous Transfer Mode Passive Optical Network) dual system providing a reliable service by dualizing intervals between optical couplers and ONUs (Optical Network Units), comprising:
a control information loading means which loads switch controlling information to a fixed area of a format transmitted and received between an OLT and the ONUs; and
a switch controlling means which switches to each of a VP or a VC on the basis of said switch controlling information.

2. The ATM-PON dual system as claimed in claim 1, wherein said switch controlling means is **characterized in** deciding necessity of switching by referring to K1/K2 byte areas of a PLOAM (Physical Layer OAM) cell for a monitor transmitted and received between the OLT and the ONUs.

3. An OLT, which is used for an ATM-PON, comprising a frame structuring means which loads SC (Switch Confirmation requirement) signals and SR (Switch Requirement) signals to unused K1 or K2 byte of a message area within a PLOAM cell, and a switch requirement transmitting means which requires line switch of ONUs by using K1/K2 bytes.

4. The OLT as claimed in claim 3, comprising:
a PLOAM cell transmitter/receiver, a PLOAM cell being used for monitoring and being transmitted and received between the OLT and the ONUs;
a dualized line termination device loading a PST message transmitter/receiver, which loads and divides switch controlling information to K1/K2 byte areas of said PLOAM cell; and
a VP/VC (Virtual Path/Virtual Channel) switch which switches a relevant VP or VC on the basis of said K1/K2 byte information.

5. An ONU, which is used for an ATM-PON, being configured by dualizing the interval between said ONU and an OLT, comprising:
two line termination devices which terminate each line;
a transmitting means which allocates signals from subscribers to said two line termination devices and transmits to said OLT;
a receiving means which receives signals transmitted from the OLT at each line termination device; and
a selector which selects either one of signals.

6. The ONU as claimed in claim 5, further comprising a switch deciding means which decides necessity of switching the ONU according to existence of switch controlling information received at each line termination device from the OLT.

7. The ONU as claimed in claim 6, **characterized in that** said switch deciding means makes a decision on the basis of a precedently determined status transition table.

8. An ATM-PON dual system including an OLT, which is used for an ATM-PON, having a frame structuring means which loads SC signals and SR signals to unused K1 or K2 byte of a message area within a PLOAM cell, and a switch requirement transmitting means which requires line switch of ONUs by using K1/K2 bytes, an ONU, which is used for an ATM-PON, being configured by dualizing the interval between said ONU and an OLT, having two line termination devices which terminate each line, a transmitting means which allocates signals from subscribers to said two line termination devices and transmits to said OLT, a receiving means which receives signals transmitted from the OLT at each line termination device, and a selector which selects either one of signals, and a plurality of optical couplers, being configured with a redundant interval between said OLT and said ONU, and selecting data at said ONU transmitted from said OLT, comprising:
a switch controlling means which controls switching of said redundant system by using switch controlling information loaded on a fixed place of a frame format transmitted and received between said OLT and said ONU.

9. An ATM-PON dual method providing a reliable service, comprising the steps of:
dualizing an interval between an optical coupler and an ONU and loading switch controlling information to K1/K2 byte areas of a PLOAM cell for a monitor, which is transmitted and received between an OLT and the ONU; and
switching a relevant VP or VC on the basis of said switch controlling information.

10. The ATM-PON dual method as claimed in claim 9, comprising the steps of:
loading SC signals and SR signals to unused K1 or K2 byte of a message area within a PLOAM cell; and
requiring line switch of the ONUs by using said K1/K2 bytes.

11. The ATM-PON dual method as claimed in claim 10, comprising the steps of:
allocating signals from subscribers to said two line termination devices at the ONU and transmitting to said OLT;
receiving signals transmitted from said OLT at each line termination device; and
selecting signals of said line termination device.

12. The ATM-PON dual method as claimed in claim 10, comprising a step of deciding necessity of switching the ONU according to existence of switch controlling information received at each line termination unit from the OLT.

13. The ATM-PON dual method as claimed in claim 10, **characterized in that** said switch deciding step makes a decision on the basis of a precedently determined status transition table.

14. The ATM-PON dual method as claimed in claim 10, comprising the steps of:
broadcasting a frame containing a PLOAM cell which loads said switch controlling information to all of the ONUs connected to downstream; and
deciding switch of a system within a relevant ONU according to existence of 0-system/1-system of switch controlling information of a PLOAM cell obtained from a frame by said each ONU.

15. The ATM-PON dual method as claimed in claim 10, comprising the steps of:
transmitting a frame containing a PLOAM cell which loads said switch controlling information to a specified ONU connected to downstream; and
deciding switch of a system within a relevant ONU according to existence of 0-system/1-system of switch controlling information of a PLOAM cell obtained from a frame by said each ONU.

16. The ATM-PON dual method as claimed in claim 10, comprising the steps of:
allocating signals from subscribers to said two line termination devices at said ONU and transmitting to said OLT;
receiving signals broadcasted from said OLT at each line termination device; and
selecting signals of said line termination device.

17. An ATM-PON dual method monitoring status of an interval between an OLT and an ONU by using a PST message, comprising the steps of:
transmitting switch confirmation requirement signals to an ONU connected to downstream all together in case of detecting a line switching trigger at said OLT; and
deciding necessity of switching a system at an ONU receiving said switch confirmation requirement signals and switching only a system of an ONU deciding that switching is necessary.

18. An ATM-PON dual method monitoring status of an interval between an OLT and an ONU by using a PST message, comprising the steps of:
transmitting switch confirmation requirement signals to an ONU connected to downstream all together in case of detecting a line switching trigger at said OLT;
deciding necessity of switching a system at an ONU receiving said switch confirmation requirement signals and returning switch confirmation reply signals to the OLT; and
switching only a system of an ONU deciding that switching is necessary.

19. The ATM-PON dual method as claimed in claim 17, **characterized in that** said ATM-PON contains a single system ONT partially, and said ONT does not process relevant signals even if receives switch confirmation requirement signals received from the OLT.

20. The ATM-PON dual method as claimed in claim 18, **characterized in that** said ATM-PON contains a single system ONT partially, and said ONT does not process relevant signals even if receives switch confirmation requirement signals received from the OLT.

21. An ATM-PON dual method containing optical couplers branching and connecting an OLT and a plurality of ONUs, being configured with a redundant interval between said ONU and said optical couplers, and receiving data at each ONU transmitted from said OLT, **characterized in** switching output lines by an optical switch provided at an output side of an ONU of said optical coupler.
